(19) **Europäisches Patentamt**

**European Patent Office**

**Office européen des brevets**

(11) Publication number: **0 487 203 A2**

## EUROPEAN PATENT APPLICATION

(21) Application number: **91309371.2**

(22) Date of filing: **11.10.91**

(51) Int. Cl.⁵: **B01D 35/00**, F01M 1/10

(30) Priority: **20.11.90 JP 120742/90**

(43) Date of publication of application:
**27.05.92 Bulletin 92/22**

(84) Designated Contracting States:
**DE FR GB**

(71) Applicant: **Mitsubishi Oil Company, Limited**
**no. 2-4, Toranomon 1-chome**
**Minato-ku Tokyo(JP)**

(72) Inventor: **Yano, Hisashi**
**1019-233, Aza Araisawa, Kuden-cho,**
**Sakae-ku**
**Yokohama-shi, Kanagawa(JP)**
Inventor: **Fujioka, Mitulu**
**184-4 Kosuzume-cho, Totsuka-ku**
**Yokohama-shi, Kanagawa(JP)**
Inventor: **Kitada, Akiharu**
**6, Kitaterao 6-chome Tsurumi-ku**
**Yokohama-shi, Kanagawa(JP)**
Inventor: **Kuwabara, Ryuzi**
**35-1 Matsumi-cho 1-chome, Kanagawa-ku**
**Yokohama-shi, Kanagawa(JP)**

(74) Representative: **Charlton, Peter John**
**Elkington and Fife Prospect House 8**
**Pembroke Road**
**Sevenoaks, Kent TN13 1XR(GB)**

(54) **Oil filter having gas separator.**

(57) An oil filter is provided being of the type which comprises a housing opened at one end thereof, a cylindrical first separator unit disposed in the housing for removing solid contaminants from an oil introduced into the housing, and a second separator unit disposed within the first separator unit for removing gaseous contaminants from the oil that has passed through the first separator unit, the second separator unit including a cylindrical casing having at least one inlet passage, a funnel-shaped cyclone fitted in the casing to define a chamber for a vortical flow of the oil introduced therein to thereby separate gas-rich oil and a removal pipe extending into the chamber along an axial center thereof for discharging the gas-rich oil. The improvement resides in that the casing has a head portion defined by a circumferential wall having an increased thickness, and that the inlet comprises an inlet passage formed through the circumferential wall and inclined relative to a radial direction of the head portion to have a greater length than the thickness to the circumferential wall. The inclined inlet passage having significant length contributes to an enhancement of the vortical flow to be subsequently generated in the chamber.

The present invention relates to an oil filter to be incorporated in a lubricating system for an internal combustion engine or the like and, more particularly, to an improvement in an oil filter of the type which can remove not only solid contaminants but also gaseous contaminants from the oil.

In machinery for construction, transportation and the like using lubricant, such as engines and various hydraulic devices, solid contaminants and gaseous contaminants have hitherto been removed from lubricant by separate devices and/or in different portions of the machinery. An integrated device has thus been desired which can remove both of the solid and gaseous contaminants effectively and which can be installed in a limited space of the machinery.

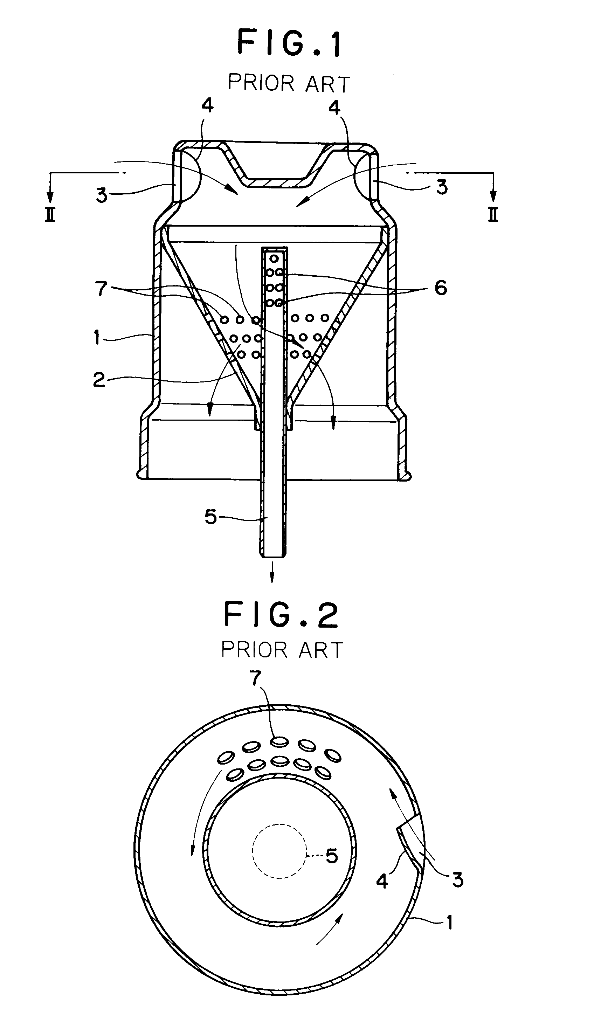

The inventors herein have proposed such an integrated device which is disclosed in a U.S. Patent No. 4,865,632 owned by Mitsubishi Oil Co., Ltd. and issued September 12, 1989. A similar device is also disclosed in a Japanese Patent Laid-Open Publication No. 2-173307 of July 4, 1990 and in the corresponding European Patent Application published under No. 0376443. The device comprises a first separator for filtering lubricant which is pumped into a housing to thereby remove solid contaminants, and a second separator for removing gaseous contaminants from the filtered oil by utilizing a centrifugal force. Specifically, the second separator in the known device has a structure substantially as illustrated in FIGS. 1 and 2 of the accompanying drawings.

It comprises a cylindrical casing 1 having a lower open end and a funnel-shaped cyclone 2 disposed within the casing 1 to define a chamber and fixed to the inner surface of casing 1 at the upper vertical end portion. A plurality of inlets 3 are formed in the side wall of the casing 1 above the cyclone 2. The casing 1 is typically made by press working of metal sheet and the inlets 3 are formed by punch press to have a semicircular configuration while providing a guide plate or deflector 4. As seen from FIG. 2, the deflector 4 extends in a direction substantially parallel to a tangent of the casing 1 at the inlet 3, so as to help the oil to flow with a vortical pattern in the chamber. A removal pipe 5 extends into the chamber along a center axis of the cyclone 2 and has an upper end portion which is provided with a number of orifices 6. Also, the cyclone 2 is formed through the wall thereof with a number of circular pores 7. The oil from the inlets 3 flows in the chamber toward its converged end with the vortical pattern, during which a centrifugal force acts on the oil. Thus, gas-rich oil having a smaller specific gravity gathers in a central area of the chamber and is discharged via the removal pipe 5. On the other hand, an oil containing little gaseous contaminants and therefore having a larger specific gravity gathers in a peripheral area of the chamber to flow out of the cyclone 2 through the pores 7, being supplied for lubrication via the lower open end of casing 1 and a passage (not shown) connected thereto.

In the above proposed device, however, the separation of gaseous contaminants has still been unsatisfactory. The inventors herein have found such an insufficient separation is attributable to the facts that the inlets 3 and deflectors 4 are not able to increase the flow velocity of the oil at all and not necessarily able to cause a laminar flow of the oil, resulting in only a weak swirl and therefore a weak centrifugal force. Further, these inlets and deflectors can not cause an efficient directional flow of the oil around the casing 1 before the oil enters into the chamber. Thus, the prior art gas separator has been unsatisfactory from the viewpoint of separating efficiency.

The present invention has been accomplished in view of the foregoing, and therefore its object is to provide an improved oil filter of the above type which can increase a gas separating efficiency by enhancing a vortical flow of oil without involving an enlargement of entire size of the device.

According to the present invention, an oil filter comprises a housing opened at one end thereof, a cylindrical first separator unit disposed in the housing for removing solid contaminants from an oil introduced into the housing, and a second separator unit disposed within the first separator unit for removing gaseous contaminants from the oil that has passed through the first separator unit, the second separator unit including a cylindrical casing having at least one inlet for the oil, a funnel-shaped cyclone fitted in the casing to define a chamber for a vortical flow of the oil introduced therein to thereby separate gas-rich oil and a removal pipe extending into the chamber along an axial center thereof for discharging the gas-rich oil. The improvement resides in the casing which has a head portion defined by a circumferential wall having an increased thickness, and in the inlet which comprises an inlet passage formed through the circumferential wall and inclined relative to a radial direction of the head portion to have a length greater than the thickness of the circumferential wall.

The inclined inlet passage gives a directionality to the oil flow and creates a laminar flow, thus contributing to an enhancement of vortical flow to be subsequently generated in the chamber. Additionally, the inclination of the inlet passage causes a directional flow of oil around the casing prior to the inflow into the passage, whereby the vortical flow in the chamber can be further enhanced.

Preferably, the inlet passage has a cross sectional area gradually reducing toward an inner end thereof.

More preferably, the inlet passage slopes downward to the inner end thereof. The circumferential wall of the head portion may be chamfered at an edge defining an outer end of the inlet passage, the edge being in the side of inclination of the inlet passage.

In one embodiment of the invention, the removal pipe includes at an end thereof a bulge having a conical outer surface and facing the inlet passage, and the inlet passage in inclined in such a manner that a virtual extension thereof approximates a tangent of the bulge. The outer surface of the bulge extends in a direction substantially parallel to a wall of the cyclone. A circular space is defined between the circumferential wall and the bulge, so that the oil from the inlet passage flows in the circular space with a vortical pattern before it enters into the chamber within the cyclone.

Other objects, features and advantages of the invention will be apparent from the following description of the preferred embodiments thereof when taken in conjunction with the accompanying drawings.

FIG. 1 is an enlarged schematic view of a second separator unit in a prior art oil filter;

FIG. 2 is a cross sectional view taken along line II - II in FIG. 1;

FIG. 3 is a longitudinally sectioned elevational view illustrating an oil filter according to an embodiment of the invention;

FIG. 4 is an enlarged schematic view of a second separator unit in the oil filter of FIG. 3;

FIG. 5 is a cross sectional view taken along line V - V in FIG. 4;

FIG. 6 is a perspective view illustrating the second separator unit of FIG. 3; and

FIG. 7 is a view similar to FIG. 5 showing a slightly modified form of the second separator unit.

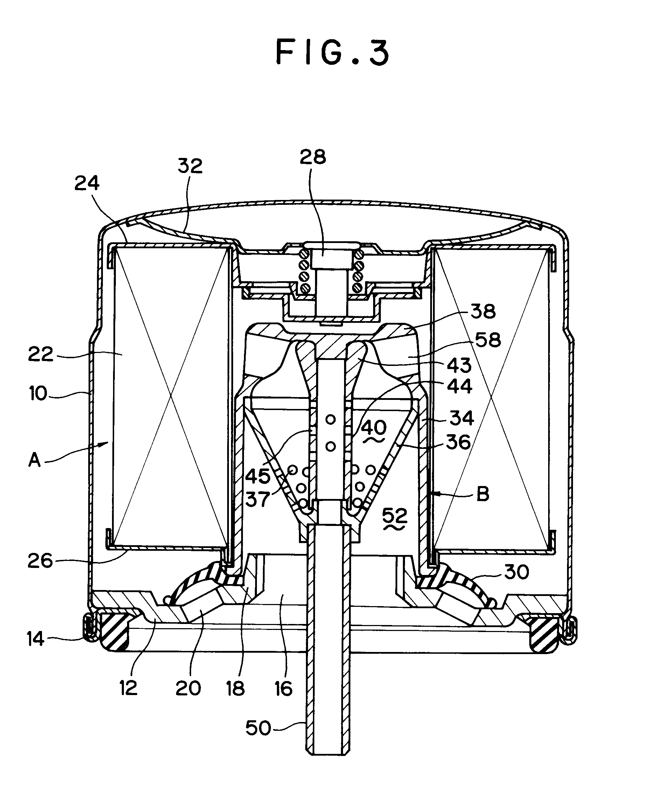

Referring now to FIG. 3 of the drawings, an oil filter according to a preferred embodiment of the invention has a housing 10 of substantially cylindrical shape having a lower open end and an upper closed end. A base plate or disk 12 is secured to an inner peripheral surface of the housing 10 at a position near its lower end and is fixedly supported by means of a ring member 14 of which outer edge is seamed with the lower edge of the housing 10. The base plate 12 is formed with a central opening 16 defined by an upwardly projecting circular wall 18 which is adapted to be used for the installation of the housing on a mount block (not shown). Plural apertures 20 are provided in the base plate 12 radially outward of the opening 16 to communicate with an oil pump (not shown) via a passage in the mount block, so that an oil is introduced into the housing 10 through the apertures 20. On the other hand, the central opening 16 is connected to, for example, an oil gallery in an engine (not shown) through another passage in the mount block.

Arranged within the housing 10 are a separator unit A for separating or filtering solid contaminants from the oil circulating in a lubricating system of a machine such as the engine, and a separator unit B for separating gaseous contaminants in the oil. The separator unit A is of usual type and comprises a filter element 22, an upper end plate 24 and a lower end plate 26 both fixed to the element 22. The filter element 22 has a hollow cylindrical shape and is typically formed of a pleated sheet of paper. The upper end plate 24 extends radially inward to support a relief valve assembly 28 which is positioned substantially at a radial center of the housing 10. This relief valve assembly 28 is adapted to open and provide a bypass passage for the oil when a pressure of oil is increased outside the filter element 22 due to a clogging thereof, so that the oil may flow through the valve 28 into the space defined within the element 22. On the other hand, the lower end plate 26 extends to the wall 18 where a check valve 30 is secured for preventing a reverse flow of the oil from the housing 10 into the passage formed in the mount block via the apertures 20. The unit A is held in position by a leaf spring 32 which is compressed between the upper end of the housing 10 and the upper end plate 24.

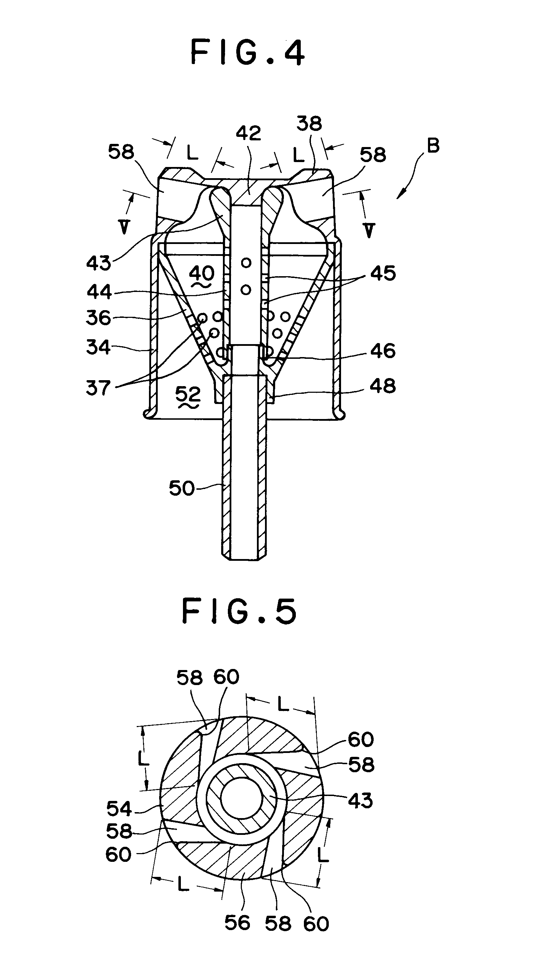

The separator unit B is disposed at the center of the housing 10 coaxially with the separator unit A. The unit B includes a cylindrical casing 34 fixedly secured at its lower end between the end plate 26 and check valve 30 and having a lower open end within which the circular wall 18 is located. A funnel-shaped member or cyclone 36 is housed within the casing 34 and is attached at its upper vertical portion to the peripheral surface of the casing 34, defining together with a bottom wall 38 of the casing 34 a chamber 40 which is adapted to generate a vortical flow of the oil as described hereinafter. The lower portion, i.e. relatively small-diametered portion, of the cyclone 36 is formed with a plurality of pores 37 to connect the chamber 40 with a space 52 defined between the cyclone 36 and the casing 34, the space 52 communicating with the central opening 16. As best shown in FIG. 4, formed at the center of the bottom wall 38 is a downwardly projecting boss 42 over which is fitted an end of an inside pipe 44 extending along an axial center of the casing 34. The fitted end has a bulge 43 defining a conical outer surface that is substantially parallel with the wall of cyclone 36. The inside pipe 44 is perforated to form a number of orifices 45 which communicate the chamber 40 with the interior of this pipe 44. The converged end portion of cyclone 36 is provided with a flange 46 projecting inwardly and then upwardly to secure the lower end of inside pipe 44, and a vertical extension 48 in which is fitted an end of outside pipe 50 connected to, for example, an oil pan (not shown) through a further passage in the mount block. The inside and outside pipes 44, 50 communicate with each other via the flange 46, constituting a removal pipe. The entire separator unit B is molded of plastic material.

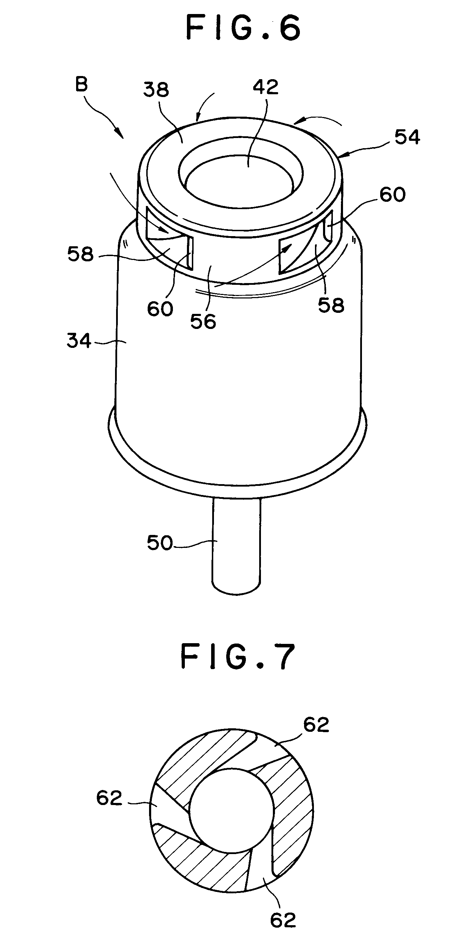

As seen from FIGS. 4 to 6, the casing 34 has a smaller-diametered head portion 54 closed by the wall 38, the circumferential wall 56 thereof being significantly thickened as compared with that of the remaining portion of casing 34. Four inlet passages 58 are formed through the circumferential wall 56 at regular angular intervals in order to introduce the oil into the chamber 40. The inlet passages 58 are inclined, all in the same direction, relative to the radial direction of head portion 54 so that each passage has a length "L" much greater than the thickness of cicumferential wall 56. The inclination of inlet passage 58 is such that a virtual extension thereof approximates to a tangent of the bulge 43 of the inside pipe 44. It also slopes down to its inner open end. As shown in FIG. 6, the inlet passage 58 has a square cross section which gradually reduces an area toward the inner end of passage 58 as the opposite surfaces defining it converge. Accordingly the inlet passage 58 has the maximum area at its outer open end, and the peripheral portion of the outer open end is chamfered at the edge 60 which is in the side of inclination of the passage to facilitate the inflow of the oil into the passage 58.

When an oil is supplied by the pump (not shown), it flows into the oil filter through the apertures 20 and the check valve 30. The oil then passes through the filter element 22 from the outside to inside during which solid contaminants are removed from the oil. The thus filtered oil flows in the space between the element 22 and casing 34 and is introduced into the casing 34 through the inlet passages 58. It is to be noted here that the fact the oil enters into the inclined passages 58 causes a directional flow of the oil around the head portion 54, as indicated by arrows in FIG. 6. Consequently the oil flow is accelerated prior to the inflow to the passages 58, and its velocity is further increased in the tapered and sloped passages 58. Further, the oil becomes a laminar flow during passing through the inlet passage 58 having significant length. The thus accelerated and directed laminar flow enters into the casing 34 from the inner open ends of passages 58 and flows in a circular space between the inner surface of head portion 54 and the bulge 43. Since the oil from the passages 58 proceeds to the bulge 43 along its tangent, and since the bulge 43 has the conical outer surface, the oil flow is still accelerated while being given a vortical pattern before it comes in the chamber 40 within the cyclone 36. Then the oil flows downward in the chamber 40 with the vortical pattern, generating a centrifugal force which acts on the oil. Due to a difference in density, the oil containing much gaseous contaminants, i.e. gas-rich oil, is separated and gathers near the axial center of the flow where it is introduced through the orifices 45 into the pipe 44 for discharge into the oil pan via the outside pipe 50. On the other hand, the remaining oil, which contains little gaseous contaminants, flows around the wall of cyclone 36 and passes through the pores 37 into the space 52 for circulation in the lubricating system via the central opening 16.

As mentioned above, the vortical flow of the oil is enhanced due to the long and inclined inlet passages 58, and the bulge 43 at the top of inside pipe 44 contributes to the further enhancement of vortical flow. Such an enhanced vortical flow increases the centrifugal force acting on the oil, so that the separation of gaseous contaminants is improved. Tests were conducted to measure a rate of separation of gaseous contaminants and revealed that the separator unit of the above embodiment increased the separating efficiency by 10% to 50% as compared with the prior art unit illustrated in FIGS. 1 and 2.

In the above embodiment, four inlet passages 58 are provided at angular interval of 90°. However, the number of this passages as well as its cross sectional area may vary and can be determined in view of desired resistance to oil flow etc.. One example of such variations is illustrated in FIG. 7 in which three inlet passages 62 are formed at an angular interval of 120°.

Although the present invention has been described with reference to the preferred embodiments thereof, many modifications and alterations may be made within the spirits of the invention.

## Claims

1. An oil filter comprising a housing opened at one end thereof, a cylindrical first separator unit disposed in said housing for removing solid contaminants from an oil introduced into said housing, and a second separator unit disposed within said first separator unit for removing gaseous contaminants from the oil that has passed through said first separator unit, said second separator unit including a cylindrical casing having at least one inlet for the oil, a funnel-shaped cyclone fitted in said casing to define a chamber for a vortical flow of the oil introduced therein to thereby separate gas-rich oil and a removal pipe extending into said chamber along an axial center thereof for discharging said gas-rich oil, characterised in that said casing has a head portion defined by a circumferential wall having an increased thickness, and wherein said inlet comprises an inlet passage formed through said circumferential wall and inclined relative to a radial direction of said head potion to have a length greater than the thickness of said circumferential wall.

2. An oil filter as claimed in claim 1, wherein said inlet passage has a cross sectional area gradually reducing toward an inner end thereof.

3. An oil filter as claimed in claim 1 or claim 2, wherein said inlet passage is inclined in such a manner that a virtual extension thereof approximates to a tangent of said removal pipe.

4. An oil filter as claimed in any of claims 1 to 3, wherein said inlet passage slopes downward to the inner end thereof.

5. An oil filter as claimed in any of claims 1 to 4, wherein said removal pipe includes at an end thereof a bulge having a conical outer surface and facing said inlet passage.

6. An oil filter as claimed in claim 5, wherein said inlet passage is inclined in such a manner that a virtual extension thereof approximates a tangent of said bulge.

7. An oil filter as claimed in claim 6, wherein said outer surface of said bulge extends in a direction substantially parallel to a wall of said cyclone.

8. An oil filter as claimed in claim 7, wherein a circular space is defined between said circumferential wall and said bulge, and wherein the oil from said inlet passage flows in said circular space with a vortical pattern before it enters into said chamber within said cyclone.

9. An oil filter as claimed in any of claims 1 to 8, wherein a plurality of said inlet passages are provided at regular angular intervals, all said inlet passages being inclined in the same direction.

10. An oil filter as claimed in any of claims 1 to 9, wherein head portion has a diameter smaller than a diameter of the remaining portion of said casing.

11. An oil filter as claimed in any of claims 5 to 10, wherein said removal pipe comprises separately formed inside and outside pipes, said inside pipe extending within said chamber and being perforated to provide a plurality of orifices, said bulge being a part of said inside pipe, and said outside pipe connecting said inside pipe with the exterior of said housing.

12. An oil filter as claimed in claim 11, wherein said cyclone is provided at a converged end thereof with an inwardly and upwardly extended flange for supporting said inside pipe and a vertical lower extension for supporting said outside pipe.

13. An oil filter as claimed in claim 11 or claim 12, wherein a bottom wall of said casing has a downwardly projected boss tightly fitted in said inside pipe, and wherein said bulge is at an upper edge thereof in close contact with the bottom wall.

14. An oil filter as claimed in any preceding claim, wherein said circumferential wall of said head portion is chamfered at an edge defining an outer end of said inlet passage, the edge being in the side of inclination of said inlet passage.

15. An oil filter as claimed in any preceding claim, wherein said second separator unit is molded of plastic material.

16. A separator unit for removing gaseous contaminants from oil, comprising a cylindrical casing having at least one inlet for the oil, a funnel-shaped cyclone fitted in said casing to define a chamber for a vortical flow of the oil introduced therein to thereby separate gas-rich oil, and a removal pipe extending into said chamber along an axial centre thereof for discharging said gas-rich oil,
characterised in that said casing has a head portion defined by a circumferential wall having an increased thickness, and wherein said inlet comprises an inlet passage formed through said circumferential wall and inclined relative to a radial direction of said head portion to have a length greater than the thickness of said circumferential wall.

EP 0 487 203 A2

# FIG.1

PRIOR ART

# FIG.2

PRIOR ART

6

# FIG.3

# FIG.4

# FIG.5

# FIG.6

B
38
42
54
58
60
60
56
58
34
50

# FIG.7

62
62
62